# EUROPEAN PATENT APPLICATION

(11) **EP 4 539 542 A1**
(43) Date of publication of application: **16.04.2025**
(21) Application number: 23838692.4
(22) Date of filing: 28.06.2023
(51) Int. Cl.: H04W 36/00

(54) **PACKET NUMBER SYNCHRONIZATION METHOD, RELATED DEVICE AND SYSTEM**

(30) Priority: 11.07.2022 CN 202210808985
(71) Applicant: Huawei Technologies Co., Ltd., Shenzhen, Guangdong 518129 (CN)
(72) Inventor: XU, Fan, Shenzhen, Guangdong 518129 (CN); WANG, Xiang, Shenzhen, Guangdong 518129 (CN); GAN, Shuang, Shenzhen, Guangdong 518129 (CN)
(74) Representative: Körber, Martin Hans
(86) International application number: PCT/CN2023/103023
(87) International publication number: WO 2024/012198

(57) **Abstract**

Embodiments of the present invention disclose a packet number synchronization method, a related device, and a system, to reduce a quantity of lost broadcast data frames or multicast data frames between a STA and an AP to which the STA performs roaming handover and improve communication efficiency while ensuring secure communication between the AP and the STA. The method includes: An AC receives a first packet number PN from a first AP, where the first AP is any one of a plurality of APs that have been associated with the AC, and the first PN indicates a quantity of multicast data frames or broadcast data frames that have been sent by the first AP. The AC sends a second PN to a second AP, where the second PN is one of a plurality of PNs corresponding to the plurality of APs, each of the plurality of PNs is from one of the plurality of APs, and the second AP is one of the plurality of APs.

## Description

This application claims priority to Chinese Patent Application No. 202210808985.5, filed with the China National Intellectual Property Administration on July 11, 2022 and entitled "PACKET NUMBER SYNCHRONIZATION METHOD, RELATED DEVICE, AND SYSTEM", which is incorporated herein by reference in its entirety.

### TECHNICAL FIELD

This application relates to the communications field, and in particular, to a packet number synchronization method, a related device, and a system.

### BACKGROUND

In an existing wireless fidelity (wireless fidelity, Wi-Fi) network, cascading networking is performed by using a plurality of access points (access points, APs), to improve signal coverage. Networking manners are classified into networking with a same basic service set identifier (basic service set identifier, BSSID) and networking with different BSSIDs. The networking with a same BSSID means that all BSSIDs of APs are the same in a same network. The networking with different BSSIDs means that BSSIDs of different APs are different in a same network. To protect security of data transmission between an AP and a station (Station, STA), data frames exchanged between the AP and the STA may be encrypted, and encrypted data frames each carry a packet number (packet number, PN) field. Each time the AP sends one data frame to the STAin a network, a value of a PN field carried in an encrypted data frame is increased by one to prevent a replay attack or an injection attack.

Each time the AP sends the data frame, a PN carried in the data frame is increased by one. The STA maintains a counter. When the STA receives the data frame, if the STA determines that the PN carried in the data frame is greater than a count value of the counter, the STA updates the count value of the counter to the value of the PN carried in the data frame; or if the STA determines that the PN carried in the data frame is less than or equal to a count value of the counter, the STA discards the data frame.

In a scenario of the networking with a same BSSID, if the STA needs to perform roaming handover between different APs, because a process of authentication, association, and key agreement does not need to be re-performed between an AP and the STA, the STA does not sense that the roaming handover occurs. However, quantities of multicast or broadcast data frames sent by the different APs in the networking with a same BSSID differ over time. If a PN of the AP to which the STA performs roaming handover is less than the count value of the counter of the STA, the AP to which the STA performs roaming handover needs to retransmit a data frame to the STA a plurality of times until the STA determines that the PN of the AP to which the STA performs roaming handover is greater than the count value of the counter of the STA. Consequently, efficiency of communication between the AP to which the STA performs roaming handover and the STA is reduced.

### SUMMARY

Embodiments of the present invention provide a packet number synchronization method, a related device, and a system, to reduce a quantity of lost broadcast data frames or multicast data frames between a STA and an AP to which the STA performs roaming handover and improve communication efficiency while ensuring secure communication between the AP and the STA.

A first aspect of embodiments of the present invention provides a packet number synchronization method. The method includes: An access controller AC receives a first packet number PN from a first access point AP, where the first AP is any one of a plurality of APs that have been associated with the AC, and the first PN indicates a quantity of multicast data frames or broadcast data frames that have been sent by the first AP. The AC sends a second PN to a second AP, where the second PN is one of a plurality of PNs corresponding to the plurality of APs, each of the plurality of PNs is from one of the plurality of APs, and the second AP is one of the plurality of APs. As shown in this aspect, the second AP sends a broadcast data frame or a multicast data frame to a STA based on the second PN from the AC. After the STA performs roaming handover, a quantity of lost multicast data frames or broadcast data frames is effectively reduced, overheads of communication between the STA and an AP to which the STA performs roaming handover are reduced, and a waste of a communication resource is reduced when secure communication between the STA and the AP to which the STA performs roaming handover is implemented to avoid a replay attack or an injection attack.

Based on the first aspect, in an optional implementation, when a larger quantity of multicast data frames or broadcast data frames sent by the first AP indicates a larger value of the first PN, the second PN is a largest value in the plurality of PNs. As shown in this implementation, the second PN is the largest value in the plurality of PNs corresponding to the plurality of APs included in a network. In this case, the second AP sends the broadcast data frame or the multicast data frame to the STA by using the second PN, so that the quantity of lost broadcast data frames or multicast data frames sent by the first AP to the STA is effectively reduced, and communication efficiency is improved.

Based on the first aspect, in an optional implementation, when a larger quantity of multicast data frames or broadcast data frames sent by the first AP indicates a smaller value of the first PN, the second PN is a smallest value in the plurality of PNs. As shown in this implementation, the second PN is the smallest value in the plurality of PNs corresponding to the plurality of APs included in a network. In this case, the second AP sends the broadcast data frame or the multicast data frame to the STA by using the second PN, so that the quantity of lost broadcast data frames or multicast data frames sent by the first AP to the STA is effectively reduced, and communication efficiency is improved.

Based on the first aspect, in an optional implementation, before the access controller AC receives the first packet number PN from the first access point AP, the method includes: The AC sends a first message to the first AP, where the first message carries a first message type field, and the first message type field is used to request the first PN. The AC receives a second message from the first AP, where the second message carries a second message type field and the first PN, and the second message type field indicates that the second message carries the first PN. As shown in this implementation, the AC triggers, by using the first message, the first AP to report the first PN. When the AC receives the plurality of PNs corresponding to the plurality of APs included in the network, the AC determines the second PN in the plurality of PNs. This ensures that the APs included in the network synchronize the second PN, reduces quantities of lost broadcast data frames or multicast data frames sent by the APs to the STA, and improves communication efficiency.

Based on the first aspect, in an optional implementation, the first message further carries a first round value, and the first round value indicates a round of sending the first message by the AC. In this implementation, the AC can synchronize PNs of the APs in different rounds by using the first round value, so that accuracy of synchronizing the PNs of the APs is improved.

Based on the first aspect, in an optional implementation, the second message carries a second round value, and before the AC sends the second PN to the second AP, the method further includes: The AC determines that the first round value is the same as the second round value. In this implementation, when the second message carries the second round value, the AC can determine that the second round value carried in the second message is specifically for synchronizing rounds of the PNs, so that the accuracy of synchronizing the PNs of the APs is improved.

Based on the first aspect, in an optional implementation, before the AC sends the second PN to the second AP, the method further includes: The AC determines that the plurality of APs are in a first synchronization success state, where the first synchronization success state means that the plurality of PNs include a PN from each of the plurality of APs, and all second round values from different APs in the plurality of APs are the same. In this implementation, the AC determines the second PN based on a state in which the plurality of APs included in the network are in the first synchronization success state, so that the accuracy of synchronizing the PNs of the APs is improved, to reduce the quantity of lost broadcast data frames or multicast data frames sent by the AP to the STA.

Based on the first aspect, in an optional implementation, the first message further carries a first time stamp, and the first time stamp indicates time at which the AC sends the first message. In this implementation, the AC can synchronize PNs of the APs in different rounds by using the first time stamp, so that accuracy of synchronizing the PNs of the APs is improved.

Based on the first aspect, in an optional implementation, the second message carries a second time stamp, and before the AC sends the second PN to the second AP, the method further includes: The AC determines that the first time stamp is the same as the second time stamp. In this implementation, when the second message carries the second time stamp, the AC can determine that the second time stamp carried in the second message is specifically for synchronizing rounds of the PNs, so that the accuracy of synchronizing the PNs of the APs is improved.

Based on the first aspect, in an optional implementation, before the AC sends the second PN to the second AP, the method further includes: The AC determines that the plurality of APs are in a second synchronization success state, where the second synchronization success state means that the plurality of PNs include a PN from each of the plurality of APs, and all second time stamps from different APs in the plurality of APs are the same. In this implementation, the AC determines the second PN based on a state in which the plurality of APs included in the network are in the second synchronization success state, so that the accuracy of synchronizing the PNs of the APs is improved, to reduce the quantity of lost broadcast data frames or multicast data frames sent by the AP to the STA.

Based on the first aspect, in an optional implementation, that an access controller AC receives a first packet number PN from a first access point AP includes: The AC receives a third message from the first AP, where the third message carries a third message type field, the first PN, and an identifier that identifies the first AP, and the third message type field indicates that the third message carries the first PN. In this implementation, the AP triggers, by using the third message, the AC to synchronize the PNs of the APs included in the network, so that signaling exchanged between the AC and the AP in a process of synchronizing the PNs of the APs included in the network is effectively reduced, and efficiency of synchronizing the PNs of the APs included in the network is improved.

Based on the first aspect, in an optional implementation, before the AC sends the second PN to the second AP, the method further includes: The AC determines that the plurality of APs are in a third synchronization success state, where the third synchronization success state means that the AC receives the plurality of PNs in one synchronization period, and the plurality of PNs include a PN from each AP of the plurality of APs. In this implementation, the AC determines the second PN based on a state in which the plurality of APs included in the network are in the third synchronization success state, so that the accuracy of synchronizing the PNs of the APs is improved, to reduce the quantity of lost broadcast data frames or multicast data frames sent by the AP to the STA.

Based on the first aspect, in an optional implementation, that the AC sends a second PN to a second AP includes: The AC sends a fourth message to the second AP, where the fourth message carries a fourth message type field and the second PN, and the fourth message type field indicates that the fourth message carries the second PN. In this implementation, the AC indicates the second PN to the second AP by using the fourth message, so that a success rate of obtaining the second PN by the AP is improved.

Based on the first aspect, in an optional implementation, that the AC sends a second PN to a second AP includes: The AC determines that a target difference is less than or equal to a threshold, and the AC sends the second PN to the second AP, where the target difference is a difference between the largest value and the smallest value in the plurality of PNs. In this implementation, the AC triggers, only when determining that the target difference is less than or equal to the threshold, synchronization of the PNs of the APs included in the network, so that a waste that is of a communication resource and that is caused by repeatedly synchronizing the PNs by the AC is avoided.

Based on the first aspect, in an optional implementation, basic service set identifiers BSSIDs of any two different APs in the plurality of APs are the same. In this implementation, networking is networking with a same BSSID, so that the STA does not sense AP switching when the STA performs roaming handover from an AP included in the network to another AP. The second AP can continue to communicate with the STA by using the second PN, so that a quantity of lost broadcast data frames or multicast data frames between the STA and the AP to which the STA performs roaming handover is reduced, and communication efficiency is improved.

A second aspect of embodiments of the present invention provides a packet number synchronization method. The method includes: An access point AP sends a first packet number PN to an access controller AC, where the AP is any one of a plurality of APs that have been associated with the AC, and the first PN indicates a quantity of multicast data frames or broadcast data frames that have been sent by the AP. The AP receives a second PN from the AC. The AP determines a target PN based on the second PN, where the target PN is a PN used for a multicast data frame or a broadcast data frame that is to be sent by the AP. For descriptions of beneficial effects of this aspect, refer to the first aspect. Details are not described again. For descriptions of beneficial effects of this aspect, refer to the first aspect. Details are not described again.

Based on the second aspect, in an optional implementation, before the access point AP sends the first packet number PN to the access controller AC, the method further includes: The AP receives a first message from the AC, where the first message carries a first message type field, and the first message type field is used to request the first PN. That an access point AP sends a first packet number PN to an access controller AC includes: The AP sends a second message to the AC based on the first message, where the second message carries a second message type field and the first PN, and the second message type field indicates that the second message carries the first PN.

Based on the second aspect, in an optional implementation, the first message further carries a first round value, the first round value indicates a round of sending the first message by the AC, and that the AP sends a second message to the AC based on the first message includes: The AP sends, to the AC, the second message carrying a second round value, where the first round value is the same as the second round value.

Based on the second aspect, in an optional implementation, the first message further carries a first time stamp, the first time stamp indicates time at which the AC sends the first message, and that the AP sends a second message to the AC based on the first message includes: The AP sends, to the AC, the second message carrying a second time stamp, where the second time stamp is the same as the first time stamp.

Based on the second aspect, in an optional implementation, that an access point AP sends a first packet number PN to an access controller AC includes: The AP sends a third message to the AC, where the third message carries a third message type field, the first PN, and an identifier that identifies the AP, and the third message type field indicates that the third message carries the first PN.

Based on the second aspect, in an optional implementation, that the AP determines a target PN based on the second PN includes: When a larger quantity of multicast data frames or broadcast data frames sent by the AP indicates a larger value of the first PN, if the AP determines that the second PN is less than or equal to a latest PN of the AP, the AP determines that the target PN is the latest PN, where the latest PN is a PN currently stored by the AP; or if the AP determines that the second PN is greater than the latest PN, the AP determines that the target PN is the second PN.

Based on the second aspect, in an optional implementation, that the AP determines a target PN based on the second PN includes: When a larger quantity of multicast data frames or broadcast data frames sent by the first AP indicates a smaller value of the first PN, if the AP determines that the second PN is greater than a latest PN, the AP determines that the target PN is the latest PN, where the latest PN is a PN currently stored by the AP; or if the AP determines that the second PN is less than the latest PN, the AP determines that the target PN is the second PN.

A third aspect of embodiments of the present invention provides an access controller. The access controller includes a processor, a memory, and a transceiver, and the processor is connected to the memory and the transceiver. The transceiver is configured to receive a first packet number PN from a first access point AP, where the first AP is any one of a plurality of APs that have been associated with the AC, and the first PN indicates a quantity of multicast data frames or broadcast data frames that have been sent by the first AP. The processor is configured to obtain a second PN, where the second PN is one of a plurality of PNs corresponding to the plurality of APs, and each of the plurality of PNs is from one of the plurality of APs. The transceiver is further configured to send the second PN to a second AP, where the second AP is one of the plurality of APs. For descriptions of beneficial effects of this aspect, refer to the first aspect. Details are not described again.

A fourth aspect of embodiments of the present invention provides an access point. The access point includes a processor, a memory, and a transceiver, and the processor is connected to the memory and the transceiver. The transceiver is configured to send a first packet number PN to an access controller AC, where the AP is any one of a plurality of APs that have been associated with the AC, and the first PN indicates a quantity of multicast data frames or broadcast data frames that have been sent by the AP. The transceiver is further configured to receive a second PN from the AC. The processor is configured to determine a target PN based on the second PN, where the target PN is a PN used for a multicast data frame or a broadcast data frame that is to be sent by the AP. For descriptions of beneficial effects of this aspect, refer to the first aspect. Details are not described again.

A fifth aspect of embodiments of the present invention provides a wireless network. The wireless network includes an access controller AC, a plurality of access points APs associated with the AC, and at least one station STA associated with each AP. A first AP is configured to send a first packet number PN to the AC, where the first AP is any one of the plurality of APs, and the first PN indicates a quantity of multicast data frames or broadcast data frames that have been sent by the first AP to the STA. The AC is configured to receive the first PN from the first AP, and is configured to send a second PN to a second AP, where the second PN is one of a plurality of PNs corresponding to the plurality of APs, each of the plurality of PNs is from one of the plurality of APs, and the second AP is one of the plurality of APs. The second AP is configured to receive the second PN from the AC. The second AP is further configured to determine a target PN based on the second PN, where the target PN is a PN used for a multicast data frame or a broadcast data frame that is to be sent by the second AP.

A sixth aspect of embodiments of the present invention provides a computer-readable storage medium. The computer storage medium stores a computer program. The computer program includes program instructions. When the program instructions are executed by a processor, the processor is enabled to perform the method according to any one of the first aspect to the third aspect.

### BRIEF DESCRIPTION OF DRAWINGS

FIG. 1 is an example diagram of a structure of a wireless network according to an embodiment of this application;
FIG. 2 is a first flowchart of steps of a PN synchronization method according to an embodiment of this application;
FIG. 3a is an example diagram of a first message format of a first message according to an embodiment of this application;
FIG. 3b is an example diagram of a first message format of a second message according to an embodiment of this application;
FIG. 3c is an example diagram of a first message format of a fourth message according to an embodiment of this application;
FIG. 4 is a second flowchart of steps of a PN synchronization method according to an embodiment of this application;
FIG. 5a is an example diagram a second message format of a first message according to an embodiment of this application;
FIG. 5b is an example diagram a second message format of a second message according to an embodiment of this application;
FIG. 5c is an example diagram a second message format of a fourth message according to an embodiment of this application;
FIG. 6 is a third flowchart of steps of a PN synchronization method according to an embodiment of this application;
FIG. 7 is an example diagram of a message format of a third message according to an embodiment of this application;
FIG. 8 is a fourth flowchart of steps of a PN synchronization method according to an embodiment of this application;
FIG. 9 is an example diagram of a first structure of a communication device according to an embodiment of this application; and
FIG. 10 is an example diagram of a second structure of a communication device according to an embodiment of this application.

### DESCRIPTION OF EMBODIMENTS

The following clearly and completely describes the technical solutions in embodiments of the present invention with reference to the accompanying drawings in embodiments of the present invention. It is clear that the described embodiments are merely a part rather than all of embodiments of the present invention. All other embodiments obtained by persons skilled in the art based on embodiments of the present invention without creative efforts shall fall within the protection scope of the present invention.

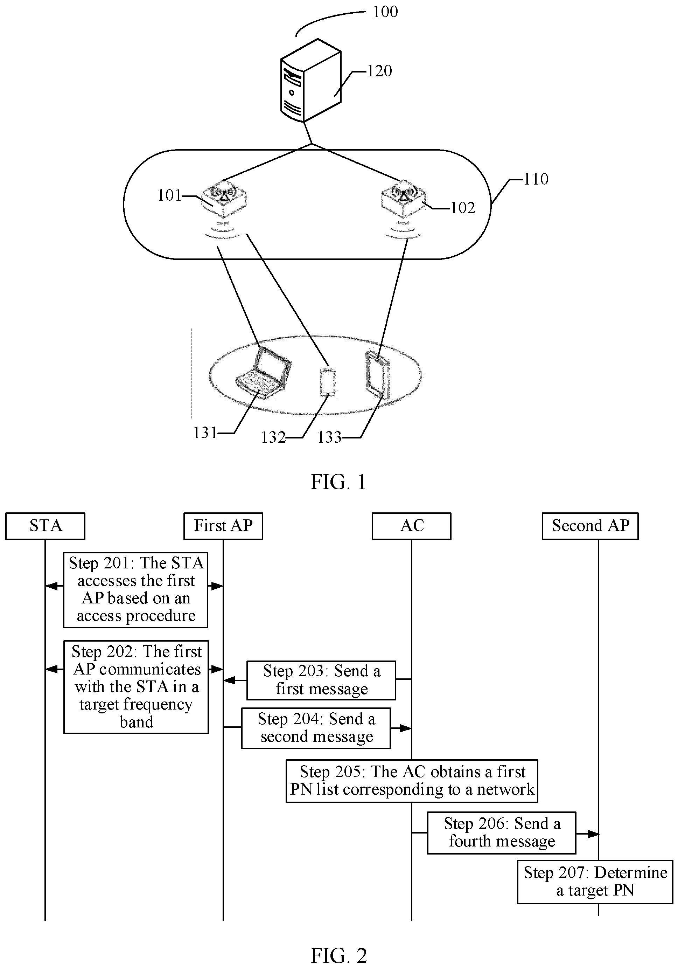

To better understand a packet number synchronization method provided in this application, a structure of a wireless network 100 provided in this application is first described with reference to FIG. 1. FIG. 1 is an example diagram of a structure of a wireless network according to an embodiment of this application.

The wireless network 100 shown in FIG. 1 includes a plurality of access devices, for example, a first access device 101 and a second access device 102 shown in FIG. 1. The first access device 101 and the second access device 102 shown in this embodiment have been cascaded to form a network 110. As shown in FIG. 1, an example in which the network 110 includes two access devices is used for description. In another example, the network 110 may include any quantity of access devices. The first access device 101 is used as an example. The first access device 101 may be an AP in a wireless local area network (wireless local area network, WLAN) or a network device in a fifth generation mobile communication technology (5th generation mobile communication technology, 5G) network. For example, the network device may be a transmission reception point (transmission reception point, TRP), a base station, or a small cell device. This is not limited in this application.

In this embodiment, coverage of a signal is improved by using the network 110 including a plurality of access devices. A plurality of stations are associated with the network 110, and each station communicates with one access device included in the network 110. The plurality of stations associated with the network 110 may include a station 131, a station 132, and a station 133 shown in FIG. 1. A quantity of the stations associated with the network 110 is not limited in this embodiment. The station 131 and the station 132 are associated with the first access device 101, and the station 133 is associated with the second access device 102. The station 131 is used as an example. The station 131 may be referred to as a STA, an access terminal, user equipment, a subscriber unit, a subscriber station, a mobile station, a remote station, a remote terminal, a mobile device, a user terminal, a terminal, a wireless communication device, a user agent, a user apparatus, or the like. This is not specifically limited in this application. A device type of the station 131 may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, user equipment in the 5G network, and the like.

The wireless network 100 shown in this embodiment further includes an access controller (access controller, AC) 120. The access controller 120 is associated with each access device included in the network 110. Specifically, the access controller 120 is associated with the first access device 101, and the access controller 120 is associated with the second access device 102. The access controller 120 is responsible for aggregating data from the access devices in the network 110 and accessing the Internet (internet), and implementing control functions such as configuration management on the access devices, authentication and management on a wireless user, Internet access, and security control.

Based on the wireless network shown in FIG. 1, the following describes, with reference to FIG. 2, an execution process of the PN synchronization method provided in embodiments of this application. FIG. 2 is a first flowchart of steps of a PN synchronization method according to an embodiment of this application.

Step 201: A STA accesses a first AP based on an access procedure.

The first AP is any one of a plurality of APs that have been associated with an AC. For example, the first AP may be the first access device 101 in the network 110 shown in FIG. 1. The STA may be the station 131 shown in FIG. 1. For specific descriptions of the first AP, the STA, and the AC, refer to the descriptions corresponding to FIG. 1. Details are not described again.

The first AP and the STA access a target frequency band based on access procedures such as a probe procedure, an authentication procedure, an association procedure, and a key exchange procedure. When the first AP and the STA access the target frequency band, the first AP can communicate with the STA in the target frequency band. The target frequency band is a frequency band supported by the first AP. For example, the target frequency band may be a 2.4 gigahertz (GHz) frequency band. For another example, the target frequency band may be a 5 GHz frequency band. The target frequency band is not limited in this embodiment. An overview of a specific process in which the STA accesses the first AP is provided below.

Based on the probe procedure, the STA sends a probe request frame to the first AP, where the probe request frame carries a media access control address (media access control address, MAC address) of the STA. After receiving the probe request frame from the STA, the first AP returns a probe response frame to the STA, where the probe response frame carries a target BSSID of the first AP and a MAC address of the first AP. The target BSSID corresponds to the target frequency band. Optionally, the first AP may alternatively directly send a beacon frame to the STA without receiving the probe request frame, where the beacon frame also carries the target BSSID and the MAC address of the first AP.

The STA and the first AP can be associated with each other only after the STA and the first AP determine, based on the authentication procedure, that authentication on each other succeeds. For example, the STA and the first AP may perform the authentication procedure based on shared-key authentication (shared-key authentication).

Based on the association procedure, the STA sends an association request frame to the first AP, where the association request frame may include various parameters of the STA, for example, a rate, an encoding scheme, and a quality of service (quality of service, QoS) capability that are supported by the STA. The first AP determines to allow the STA to be associated with the first AP. That is, the first AP allows the first AP and the STA to communicate with each other in the target frequency band. The first AP sends response information to the STA to complete association.

Based on the key exchange procedure, the first AP and the STA agree on a subsequent key for secure communication in the target frequency band. It should be noted that the descriptions of the access procedure in this embodiment are an optional example, and constitute no limitation, provided that the first AP can communicate with the STA in the target frequency band based on the access procedure.

Step 202: The first AP communicates with the STA in the target frequency band.

Based on the foregoing access procedure, the first AP and the STA separately obtain access information to communicate with each other in the target frequency band. The first AP and the STA communicate with each other in the target frequency band based on the access information.

To ensure data security, the first AP sends an encrypted data frame to the STA, where the data frame may be a broadcast data frame. Specifically, the first AP sends the broadcast data frame to all STAs associated with the first AP. The data frame may alternatively be a multicast data frame. The first AP sends the multicast data frame to some STAs associated with the first AP. Specifically, the first AP encrypts data by using a counter mode with cipher block chaining message authentication code protocol (counter mode with cipher block chaining message authentication code protocol, CCMP), to obtain a mediaaccess control protocol data unit (mediaaccess control protocol data unit, MPDU). The MPDU is the broadcast data frame or the multicast data frame that the first AP needs to send to the STA.

The first AP sets an AP-side anti-replay counter. An initial value of the AP-side anti-replay counter is 0. Each time the first AP has a to-be-sent multicast or broadcast MPDU, the first AP increases a value of the AP-side anti-replay counter by 1. The first AP sets a value of a PN field in the MPDU to a current count of the AP-side anti-replay counter. The STA sets a STA-side anti-replay counter. An initial value of the STA-side anti-replay counter is 0. Each time the STA successfully receives one MPDU, the STA increases a value of the STA-side anti-replay counter by 1. In this embodiment, an example in which the initial values of the AP-side anti-replay counter and the STA-side anti-replay counter are both 0 is used, and constitutes no limitation. In another example, the initial values of the AP-side anti-replay counter and the STA-side anti-replay counter each may be any value.

Example 1: When the first AP needs, for the first time, to send an MPDU to the STA, the first AP sets the value of the AP-side anti-replay counter to be equal to the initial value plus 1, that is, equal to 0 plus 1, that is, equal to 1; and the first AP further sets a value of a PN field in the MPDU to the current value (that is, 1) of the AP-side anti-replay counter. When the STA receives the MPDU, the STA determines that the value of the PN field in the MPDU is 1. In addition, the value of the STA-side anti-replay counter is the initial value (that is, 0). In this case, the STA determines that the value (that is, 1) of the PN field in the received MPDU is greater than the value (that is, 0) of the STA-side anti-replay counter, and the STA determines that the MPDU is an MPDU in a secure state. In this case, the STA sets the value of the STA-side anti-replay counter to the value (that is, 1) of the PN field in the MPDU.

Example 2: By analogy, when the first AP needs, for an N^{th} time, to send an MPDU to the STA, the first AP sets the value of the AP-side anti-replay counter to N, where N is any positive integer greater than 1; and the first AP further sets a value of a PN field in the MPDU sent for the N^{th} time to the current value (that is, N) of the AP-side anti-replay counter. When the STA receives the MPDU, the STA determines that the value of the PN field in the MPDU is N. In addition, the value of the STA-side anti-replay counter is N-1. In this case, the STA determines that the value (that is, N) of the PN field in the received MPDU is greater than the value (that is, N-1) of the STA-side anti-replay counter, and the STA determines that the MPDU is an MPDU in a secure state. The STA sets the value of the STA-side anti-replay counter to the value (that is, N) of the PN field in the MPDU.

The MPDU in the secure state in this embodiment means that the MPDU is not an MPDU for a replay attack or an injection attack. The replay attack is used as an example. The replay attack means that an attack device obtains an MPDU that has been successfully received by the STA and then the attack device resends the MPDU to the STA to deceive the STA. The attack device uses the MPDU to steal information about the STA and implement an attack objective such as destroying correctness of authentication between the first AP and the STA. Still refer to the foregoing example. If the attack device obtains the MPDU received by the STA for the N^{th} time, and the value of the PN field in the MPDU is N, the attack device resends the MPDU to the STA. When the STA receives the MPDU, the STA determines that the value of the PN field in the MPDU is N (because a PN from the attack device does not undergo processing performed by the first AP on the PN field). In addition, the value of the STA-side anti-replay counter is N. In this case, the STA determines that the value (that is, N) of the PN field in the received MPDU is equal to the value (that is, N) of the STA-side anti-replay counter. When the STA determines that the value of the PN field in the received MPDU is less than or equal to the value of the STA-side anti-replay counter, the STA directly discards the MPDU. In this case, the STA shown in this example discards the MPDU from the attack device. It may be understood that, the first AP sends, to the STA, the MPDU including the PN, so that secure communication between the first AP and the STA is ensured, to prevent the STA from the replay attack or the injection attack of the attack device.

If in the example 1 and the example 2, the first AP encrypts a data frame by using a first key, to obtain an MPDU, and the first AP may periodically change a key, for example, update the first key to a second key, an MPDU subsequently sent by the first AP to the STA is generated through encryption performed by using the second key. When the first AP determines that the first key is updated to the second key, the first AP resets the value of the AP-side anti-replay counter to the initial value. The first AP indicates the STA to update the first key to the second key. In this case, the STA also resets the value of the STA -side anti-replay counter to the initial value. For a process in which the first AP subsequently sends the MPDU to the STA based on the second key, refer to the foregoing example 1 and example 2. Details are not described again. This embodiment does not limit types of the first key and the second key. For example, the first key and the second key may be pairwise transient keys (pairwise transient keys, PTKs) or group temporal keys (group temporal keys, GTKs) for group addressed frame encryption.

Step 203: The AC sends a first message to the first AP.

The first message requests the first AP to send a first PN, where the first PN is a current count of the AP-side anti-replay counter. As shown in step 202, it can be learned that, if an initially agreed key is always used between the first AP and the STA, the current count of the AP-side anti-replay counter is a quantity of MPDUs that have been sent by the first AP through broadcast or multicast. If a key update has occurred between the first AP and the STA, the current count of the AP-side anti-replay counter is a quantity of MPDUs that have been sent by the first AP through broadcast or multicast until a current moment by using a latest key update as a start moment. Specifically, the AC sends the first message to each AP included in a network associated with the AC, so that the AP included in the network sends a first PN of the AP to the AC.

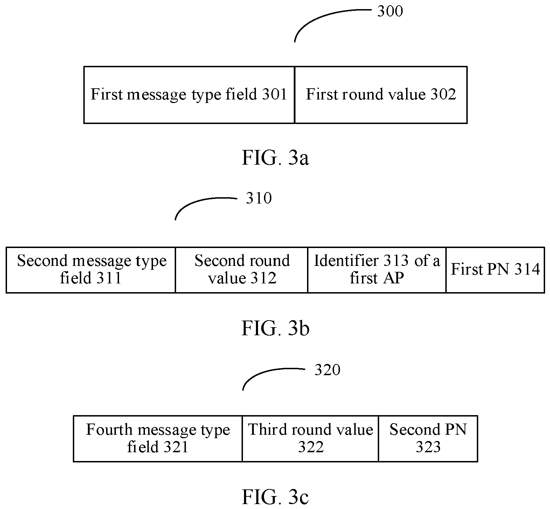

For a format of the first message shown in this embodiment, refer to FIG. 3a. FIG. 3a is an example diagram of a first message format of a first message according to an embodiment of this application. The first message 300 includes a first message type field 301 and a first round value 302. The first message type field 301 is used to request a first PN. Specifically, the first message type field 301 indicates a parsing manner of parsing the first message, for example, a decoding scheme or a quantity of decoded bits, so that the first AP can successfully obtain the first round value 302 by parsing the first message 300 based on the first message type field 301. When the first AP receives the first message 300, the first AP sends the first PN to the AC based on an indication of the first message type field 301. The first round value 302 included in the first message 300 indicates a round of sending the first message 300 by the AC. A process in which the AC sends, each time, the first message to each AP included in a same network is a round of performing PN synchronization by the AC. In a process in which the AC performs PN synchronization in each round, a first PN returned, based on the first message, by the AP included in the same network is received. It may be understood that, when the AC sends, in a plurality of rounds to the AP included in the same network, the AC receives different first PNs in different rounds for a same AP. To improve PN synchronization accuracy, the AC needs to distinguish between different rounds for a plurality of first PNs from the same AP. The AC may store a round statistical table shown in Table 1.

**Table 1**

| Round | First round | Second round | ... | M^{th} round |
|---|---|---|---|---|
| Round value | Round value: 1 | Round value: 2 | ... | Round value: M |

For example, in a process in which the AC performs PN synchronization in the first round, the AC sends, to the APs in the same network by using a first message, the round value whose value is 1. In a process in which the AC performs PN synchronization in the second round, the AC sends, to the APs in the same network by using a first message, the round value whose value is 2. By analogy, in a process in which the AC performs PN synchronization in the M^{th} round, the AC sends, to the APs in the same network by using a first message, the round value whose value is M, where M is any positive integer greater than 1. The descriptions of the values of the round values in this embodiment are an optional example, provided that different rounds correspond to different round values in a process in which the AC performs PN synchronization in different rounds. It may be understood that the different round values carried in the first messages are for distinguishing between the rounds for statistics collection in the different first messages. In this embodiment, an example in which a value of a corresponding round value progressively increases in turn with a progressive increase of a PN synchronization round is used. In another example, a value of a corresponding round value may alternatively progressively decrease in turn with a progressive increase of a PN synchronization round. A change rule of a round value and a specific value of each round of PN synchronization are not limited in this embodiment, provided that the different round values uniquely correspond to the different rounds of PN synchronization.

The first message shown in this embodiment may further carry a field for implementing another function. For example, the first message may further carry a field for implementing a cyclic redundancy check (cyclic redundancy check, CRC) check.

A time sequence of performing step 202 and step 203 is not limited in this embodiment.

Step 204: The first AP sends a second message to the AC based on the first message.

In this embodiment, when receiving the first message from the AC, the first AP sends the second message to the AC, where the second message carries the first PN. For a specific format of the second message, refer to FIG. 3b. FIG. 3b is an example diagram of a first message format of a second message according to an embodiment of this application. The second message 310 includes a second message type field 311, a second round value 312, an identifier 313 of the first AP, and a first PN 314.

The second message type field 311 shown in this embodiment indicates that the second message is a message that has carried the first PN. The AC can parse the second message based on an indication of the second message type field 311, to obtain the fields carried in the second message. For descriptions of the second message type field 311, refer to the descriptions of the first message type field shown in FIG. 3a. Details are not described again. The second message 310 further includes the second round value 312, the identifier 313 of the first AP, and the first PN. Specifically, after receiving the first message, the first AP obtains the first round value by parsing the first message. In the second message generated by the first AP, the second round value is equal to the first round value. For example, if the first round value obtained by the first AP by parsing the first message is the round value that is M, the first AP sets, in the second message 310, the round value that is M. It may be understood that the first AP sets, in the second message 310, the round value obtained by parsing the first message. The identifier 313 of the first AP identifies the first AP. For example, the identifier 313 of the first AP may be a media access control address (media access control address, MAC address) of the first AP.

In this embodiment, the first AP may directly send the second message to the AC when receiving the first message, or the first AP may send the second message to the AC when determining that a reporting condition is satisfied. A first PN sent by the first AP to the AC when the reporting condition is satisfied is a PN that has not been sent by the first AP to the AC and that is latest. Specifically, the reporting condition is that the first round value is greater than a current round value of a round counter. With reference to the example shown in Table 1, in the process in which the AC performs PN synchronization in the first round, because the AC sends, to the first AP, the round value that is 1, the first AP determines that the current round value of the round counter is the round value that is 1. By analogy, in the process in which the AC performs PN synchronization in the M^{th} round, because the AC sends, to the first AP, the round value that is M, the first AP determines that the current round value of the round counter is the round value that is M. It can be learned that the current round value recorded by the round value counter is a largest value in all round values that have been received by the first AP.

It may be understood that it is assumed that a current count of the round value counter of the first AP is a round value that is J, and a round value carried in the first message currently received by the first AP is a round value that is K. If J is greater than or equal to K, it indicates that a process in which the AC performs PN synchronization in a K^{th} round has been completed (that is, the first AP has sent, to the AC, the round value that is K and that is for implementing the K^{th} round of PN synchronization), the first AP determines that the first message carrying the round value that is K is caused by an exception such as retransmission, and the first AP does not return, to the AC, a second message carrying the round value that is K. If J is less than K, it indicates that PN synchronization performed by the AC in a K^{th} round has not been completed (that is, the first AP has not sent, to the AC, the round value that is K and that is for implementing the K^{th} round of PN synchronization), and the first AP returns, to the AC, a second message carrying the round value that is K.

Step 205: The AC obtains a first PN list corresponding to the network.

In this embodiment, the AC receives the first PN from each AP included in the network. For descriptions of a process in which the AC receives the first PN from the AP, refer to step 203 and step 204. Details are not described again.

The AC creates a corresponding first PN list for a process of each round of PN synchronization. It may be understood that the AC creates a first PN list for each round value. With reference to the example shown in Table 1, the AC creates a corresponding first PN list for the round value that is 1, creates a corresponding first PN list for the round value that is 2, and by analogy, creates a corresponding first PN list for the round value that is M. A process in which the AC creates, for the round value that is M, a first PN list shown in Table 2 is used as an example for description below. For a process in which the AC creates a first PN list for any round value, refer to the following descriptions of Table 2. Details are not described again.

**Table 2**

| AP | AP 1 | AP 2 | AP 3 | AP 4 |
|---|---|---|---|---|
| Identifier of the AP | MAC address of the AP 1 | MAC address of the AP 2 | MAC address of the AP 3 | MAC address of the AP 4 |
| First PN from the AP | First PN of the AP 1 | First PN of the AP 2 | First PN of the AP 3 | First PN of the AP 4 |

In the example shown in Table 2, that the network associated with the AC includes four APs, namely, the AP 1, the AP 2, the AP 3, and the AP 4 is used as an example. The descriptions of a quantity of APs included in the network in this example are an optional example, and constitute no limitation. The AC receives a second message from the AP 1, and the AC parses the second message based on a second message type field carried in the second message, to obtain the fields in the second message. For specific descriptions, refer to FIG. 3b. Details are not described again. If a second round value obtained by the AC by parsing the second message is the round value that is M, the AC determines that the second message from the AP 1 is for the M^{th} round of PN synchronization, the AC may set the first PN carried in the second message in the first PN list, and the AC can further set an identifier of the AP 1 (that is, the MAC address of the AP1) carried in the second message in the first PN list. It can be learned that a first PN list created for the AP 1 in the process in which the AC performs PN synchronization in the M^{th} round includes a correspondence between the round value that is M, the MAC address of the AP 1, and the first PN of the AP 1. By analogy, a first PN list created for the AP 4 in the process in which the AC performs PN synchronization in the M^{th} round includes a correspondence between the round value that is M, the MAC address of the AP 4, and the first PN of the AP 4.

If the AC determines that the first PN list corresponding to the round value that is M satisfies a first synchronization success state, the AC determines that creation of the first PN list corresponding to the round value that is M is completed. The first synchronization success state means that the first PN list created by the AC for the round value that is M includes a PN of each AP associated with the AC. Specifically, the first synchronization success state means that the first PN list created by the AC for the round value that is M includes a MAC address of the AP associated with the AC. For example, if the AC determines that the network includes the AP 1, the AP 2, the AP 3, and the AP 4, and the AC determines that the first PN list created for the round value that is M includes the MAC address of the AP 1, the MAC address of the AP 2, the address of the AP 3, and the MAC address of the AP 4, the AC determines that the first synchronization success state is satisfied. It may be understood that the first PN list created by the AC for the round value that is M includes a first PN of each first AP that has been associated with the AC. Optionally, in this embodiment, that the first PN list corresponding to the round value that is M satisfies the first synchronization success state is used as an example. In another example, in the process in which the AC performs PN synchronization in the M^{th} round, first PNs of some first APs that have been associated with the AC are received, and the AC may determine a second PN in the received first PNs, to perform PN synchronization. For example, in the AP 1, the AP 2, the AP 3, and the AP 4 that are associated with the AC, the AC receives the first PN from the AP 1, the first PN from the AP 2, and the first PN from the AP 3, and has not received the first PN of the AP 4. The AC may determine the second PN based only on the first PN of the AP 1, the first PN of the AP 2, and the first PN of the AP 3, to synchronize, by using the second PN, the PN of each AP associated with the AC.

Step 206: The AC sends a fourth message to the second AP.

In this embodiment, for a manner in which the AC sends the second PN to the second AP, refer to the following several optional manners.

### Manner 1

The AC sends the fourth message to each AP in the network that has been associated with the AC. It may be understood that the second AP in this example is the AP in the network that has been associated with the AC. For a specific format of the fourth message, refer to FIG. 3c. FIG. 3c is an example diagram of a first message format of a fourth message according to an embodiment of this application. The fourth message 320 includes a fourth message type field 321, a third round value 322, and a second PN 323. The fourth message type field 321 indicates the second AP to obtain the second PN 323 and the third round value 322 that are carried in the fourth message.

The second PN carried in the fourth message is described as follows: When the AC successfully creates the first PN list corresponding to the round value that is M, the AC determines that the second PN is a largest value in a plurality of first PNs included in the first PN list. Still refer to the example shown in Table 2. The AC determines that a largest value in the first PN of the AP 1, the first PN of the AP 2, the first PN of the AP 3, and the first PN of the AP 4 that are included in the first PN list is the second PN. For example, if the first PN of the AP 4 in the first PN list is the largest value in the first PNs included in the first PN list, the AC determines that the first PN of the AP 4 is the second PN.

The third round value is a round of obtaining the second PN by the AC. Still refer to the example shown in Table 2. The AC obtains the second PN in the M^{th} round. In this case, the AC determines that the third round value 322 carried in the fourth message is the round value that is M.

### Manner 2

The AC sends the fourth message only to the second AP that satisfies a PN synchronization condition and that is included in the network. It may be understood that the second AP in this example is an AP that satisfies the PN synchronization condition in the network that has been associated with the AC. For descriptions of the fourth message, refer to the foregoing manner 1. Details are not described again. The second AP that satisfies the PN synchronization condition means that a third PN of the second AP is less than the second PN in the first PN list corresponding to the round value that is M. The third PN is a PN carried in the second message from the second AP. Still refer to the example shown in Table 2. The AC determines that the second PN is the first PN of the AP 4 (for specific descriptions, refer to the example in the foregoing manner 1, and details are not described again). In this case, the AC determines that the PN stored by the AP 4 has been a largest value in a plurality of first PNs in the first PN list corresponding to the round value that is M. In this case, in the process of the M^{th} round of PN synchronization, the first PN stored by the AP 4 does not need to be synchronized. Therefore, the AC determines that all of the AP 1, the AP 2, and the AP 3 are second APs that need PN synchronization. The AC sends the fourth message to the AP 1 based on the MAC address that is of the AP 1 and that is included in the first PN list. By analogy, the AC sends the fourth message to the AP 3 based on the MAC address that is of the AP 3 and that is included in the first PN list.

It may be understood that the second AP and the first AP in this embodiment may be a same AP in a same network, or the second AP and the first AP may be different APs in a same network.

Step 207: The second AP determines a target PN based on the fourth message.

The target PN is a PN used for a data frame to be sent by the second AP. Specifically, when the second AP determines the target PN, an MPDU subsequently sent by the second AP to the STA through broadcast or multicast carries the target PN, to ensure secure communication between the second AP and the STA. The following describes, by using examples, several optional manners in which the second AP determines the target PN based on the fourth message.

### Manner 1

The second AP obtains, from the fourth message from the AC, the third round value and the second PN that are carried in the fourth message. Specifically, the second AP parses the fourth message based on the fourth message type field in the fourth message, to obtain the fields carried in the fourth message. The second message sent by the second AP to the AC carries the second round value. For descriptions of the second round value, refer to step 204. Details are not described again.

When the second round value is equal to the third round value, the second AP determines that the target PN is the second PN. The second round value being equal to the third round value indicates that the second AP has sent a PN of the second AP to the AC (for a specific process, refer to step 204, and details are not described). Therefore, when the second AP determines that the target PN is the second PN, the target PN is a largest value in PNs corresponding to the APs in the network.

### Manner 2

First, the second AP obtains, from the fourth message from the AC, the second PN carried in the fourth message. Then, the second AP obtains a latest PN stored by the second AP, where the latest PN is a latest PN stored by the second AP before the second AP receives the fourth message. That is, the latest PN is a current count of an AP-side anti-replay counter of the second AP. For specific descriptions of the AP-side anti-replay counter, refer to the example 1 and the example 2 in step 202. Details are not described again. For example, if the second AP has sent MPDUs to the STA M times, the latest PN is a PN carried in an MPDU sent by the second AP to the STA for an M^{th} time.

If the second AP determines that the second PN from the AC is less than or equal to the latest PN, the second AP determines that the target PN is the latest PN. Specifically, in the process of the M^{th} round of PN synchronization, the second AP sends the round value that is M and the first PN to the AC. This indicates that the second AP has completed the process of the M^{th} round of PN synchronization (that is, the second AP has sent, to the AC, the second message carrying the round value that is M). In this case, the count of the AP-side anti-replay counter is the first PN. However, when the second AP has not received the second PN from the AC, the second AP continues to send a new MPDU to the STA through broadcast or multicast. As a result, the count of the AP-side anti-replay counter of the second AP continues to progressively increase. For descriptions of the progressive increase, refer to the descriptions of the foregoing example 1 and example 2. Details are not described again. The second AP receives the second PN from the AC only after the count of the AP-side anti-replay counter of the second AP progressively increases to the latest PN. As a result, the second PN is less than the latest PN. If the second AP sends an MPDU to the STA through broadcast or multicast by using the second PN, the MPDU carrying the second PN cannot be successfully received by the STA (because the count of the STA-side anti-replay counter is greater than the second PN). Therefore, when the second AP shown in this example determines that the second PN is less than or equal to the latest PN, the second AP does not update the count of the AP-side anti-replay counter, but continues to send the MPDU to the STA by using the latest PN. Therefore, the second AP shown in this example determines that the target PN is the latest PN.

If the second AP determines that the second PN from the AC is greater than the latest PN, the second AP determines that the target PN is the second PN. Specifically, in the process of the M^{th} round of PN synchronization, the second AP sends the round value that is M and the first PN to the AC. This indicates that the second AP has completed the process of the M^{th} round of PN synchronization (that is, the second AP has sent, to the AC, the second message carrying the round value that is M). In this case, the count of the AP-side anti-replay counter is the first PN. Then, the second AP receives the second PN from the AC, where the second PN is a largest PN in the network associated with the AC. When the second PN is greater than the latest PN, it indicates that the count of the AP-side anti-replay counter of the second AP is less than a second PN stored by another AP included in the network. Therefore, to ensure that the MPDU sent by the second AP to the STA through broadcast or multicast can be successfully received by the STA, the second AP shown in this example determines that the target PN is the second PN.

When the second AP obtains the target PN, in a process of subsequently sending the MPDU to the STA, the second AP sets the target PN in the MPDU, to implement the secure communication between the second AP and the STA. To better understand descriptions of beneficial effects of the method provided in this embodiment, a technical defect of an existing solution is first described.

A STA is associated with an AP 1. For a process of MPDU transmission between the AP 1 and the STA, refer to the foregoing example 1 and example 2. Details are not described again. If the STA performs roaming handover, that is, the STA performs roaming handover from the AP 1 to an AP 2, for example, the STA performs roaming handover from the AP 1 to the AP 2 when a target parameter between the AP 1 and the STA is less than a target parameter between the AP 2 and the STA, the target parameter may be at least one of the following:
a received signal strength indicator (received signal strength indicator, RSSI), channel quality, a transmission rate, a reference signal received power (reference signal received power, RSRP), reference signal received quality (reference signal received quality, RSRQ), or a signal to interference plus noise ratio (signal to interference plus noise ratio, SINR).

The AP 1 and the AP 2 are located in a same network, the network is formed by networking with a same BSSID, and a BSSID of the AP 1 and a BSSID of the AP 2 are the same. In this case, when the STA performs roaming handover from the AP 1 to the AP 2, access procedures such as a probe procedure, an authentication procedure, an association procedure, and a key exchange do not need to be performed between the STA and the AP 2 again to perform roaming handover to the AP 2, and the STA may continue to communicate with the AP 2 by using a key used for secure communication with the AP 1.

However, a count of an AP-side anti-replay counter of the AP 1 may be different from a count of an AP-side anti-replay counter of the AP 2. For example, in an example 3, the count of the AP-side anti-replay counter of the AP 1 is 150, and the count of the AP-side anti-replay counter of the AP 2 is 100. In a process of communication between the STA and the AP 1, a count of a STA-side anti-replay counter of the STA is 149. For descriptions of the AP-side anti-replay counter and the STA-side anti-replay counter, refer to the descriptions in step 202. Details are not described again. In this case, when the STA performs roaming handover to the AP 2, the count of the STA-side anti-replay counter of the STA maintains 149.

If the count of the AP-side anti-replay counter of the AP 2 is 100, a value of a PN carried in an MPDU sent by the AP 2 through broadcast or multicast is 100. In addition, the STA-side anti-replay counter of the STA is 149. For descriptions of a relationship between the value of the PN included in the MPDU and the AP-side anti-replay counter, refer to the foregoing example 1 and example 2. Details are not described again. When the value of the STA-side anti-replay counter is greater than or equal to the PN carried in the MPDU, the STA discards the MPDU to prevent the STA from receiving a retransmitted MPDU. Therefore, the STA discards the MPDU from the AP 2. A value of a PN carried in an MPDU sent by the AP 2 through broadcast or multicast again is 101, and the STA determines that the value of the STA-side anti-replay counter is still greater than or equal to the PN carried in the MPDU. The STA continues to discard the MPDU. By analogy, the STA successfully receives, only when the STA determines that the value of the STA-side anti-replay counter is less than the PN carried in the MPDU, an MPDU of the AP 2 to which the STA performs roaming handover. It may be understood that in this example, the STA needs to discard 50 MPDUs, so that the STA can successfully receive the MPDU from the AP 2 to which the STA performs roaming handover. Efficiency of successful communication between the STA and the AP to which the STA performs roaming handover is reduced, and overheads of communication between the STA and the AP to which the STA performs roaming handover are increased.

In the method shown in this embodiment, the AC can determine, based on the first PN from each AP in the network, the second PN in the plurality of first PNs corresponding to the network, where the second PN is the largest value in the plurality of first PNs corresponding to the network. The AC sends the second PN to the AP included in the network, to ensure that PNs stored by the APs included in the network are all second PNs. Still refer to the foregoing example 3. The count of the AP-side anti-replay counter of the AP 1 is 150, and the count of the AP-side anti-replay counter of the AP 2 is 100. If the AC determines that a largest value in values of AP-side anti-replay counters corresponding to the APs in the network is 150, the AC sends a PN whose value is 150 to the AP, and the AP 2 changes the value of the PN stored by the AP 2 from 100 to 150. It may be understood that, when the STA performs roaming handover from the AP 1 to the AP 2, the value of the PN in the MPDU from the AP 2 is 150, and the value of the STA-side anti-replay counter is 149. After performing roaming handover to the AP 2, the STA can directly communicate with the AP 2 successfully. When the STA performs roaming handover, the efficiency of the successful communication between the STA and the AP to which the STA performs roaming handover can be effectively improved, and the overheads of the communication between the STA and the AP to which the STA performs roaming handover are reduced. When secure communication between the AP and the STA is implemented to avoid the replay attack or the injection attack, a quantity of lost data frames is effectively reduced, and a waste of a communication resource is reduced.

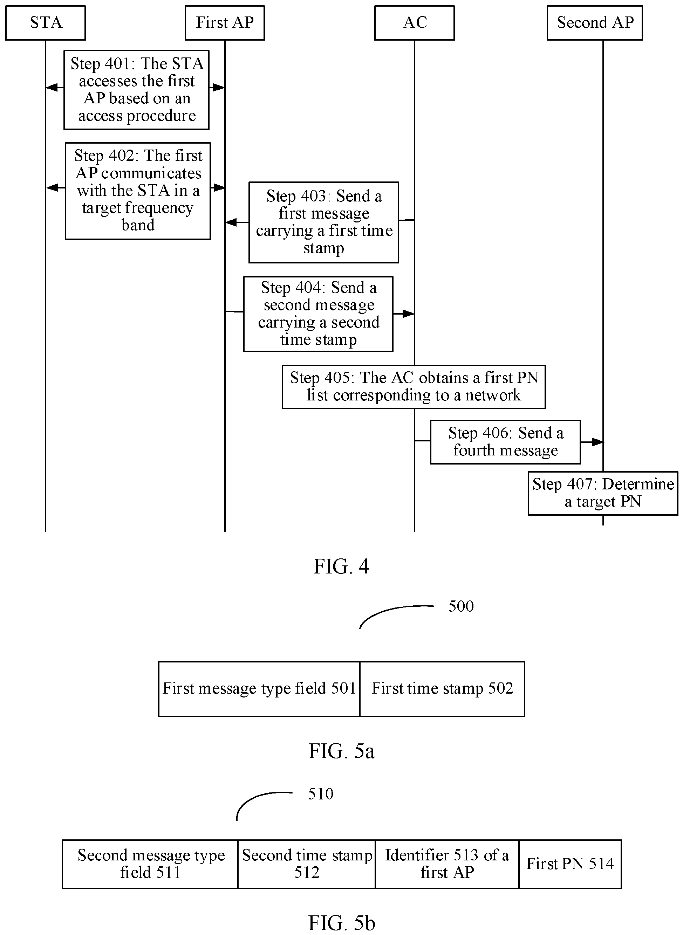

In the embodiment shown in FIG. 2, the AC distinguishes between the different rounds of PN synchronization by using the round values. In an embodiment shown in FIG. 4, an AC distinguishes between different rounds of PN synchronization by using time stamps. FIG. 4 is a second flowchart of steps of a PN synchronization method according to an embodiment of this application.

Step 401: A STA accesses a first AP based on an access procedure.

Step 402: The first AP communicates with the STA in a target frequency band.

For execution processes of steps 401 and 402 shown in this embodiment, refer to steps 201 and 202 shown in FIG. 2. Details are not described again.

Step 403: An AC sends, to the first AP, a first message carrying a first time stamp.

The first message requests the first AP to send a first PN. For descriptions of the first PN, refer to step 203 in FIG. 2. Details are not described again.

For a format of the first message shown in this embodiment, refer to FIG. 5a. FIG. 5a is an example diagram of a second message format of a first message according to an embodiment of this application. The first message 500 includes a first message type field 501 and a first time stamp 502. For descriptions of the first message type field 501, refer to step 203 in FIG. 2. Details are not described again. The first time stamp 502 included in the first message 500 indicates a time stamp at which the AC sends the first message. Each time of sending the first message by the AC to each AP included in a same network is a round of performing PN synchronization by the AC. In a process in which the AC performs PN synchronization in each round, a first PN returned, based on the first message, by the AP included in the same network is received. It may be understood that, when the AC sends, in a plurality of rounds, first messages to the AP included in the same network, the AC receives a plurality of PNs in different rounds for a same AP. To improve PN synchronization accuracy, the AC needs to distinguish between the first PNs from the different rounds for the plurality of first PNs from the same AP. The AC may store a round statistical table shown in Table 3.

**Table 3**

| Round | First round | Second round | ... | M^{th} round |
|---|---|---|---|---|
| First time stamp | First time stamp b1 | First time stamp b2 | ... | First time stamp bM |

It can be learned that the round statistical table created by the AC includes a correspondence between different rounds of PN synchronization and corresponding first time stamps. For example, in a process in which the AC performs PN synchronization in the first round, the AC sends the first time stamp b1 to each AP in the same network by using a first message, where the first time stamp b1 indicates time at which the AC sends the first message in the first round. By analogy, in a process in which the AC performs PN synchronization in an M^{th} round, the AC sends the first time stamp bM to the AP in the same network by using a first message, where the time stamp bM indicates time at which the AC sends the first message in the M^{th} round.

Step 404: The first AP sends, to the AC, a second message carrying a second time stamp.

In this embodiment, when receiving the first message from the AC, the first AP sends the second message to the AC, where the second message carries the first PN. For a specific format of the second message, refer to FIG. 5b. FIG. 5b is an example diagram a second message format of a second message according to an embodiment of this application. The second message 510 includes a second message type field 511, a second time stamp 512, an identifier 513 of the first AP, and a first PN 514. For descriptions of the second message type field 511, the identifier 513 of the first AP, and the first PN 514, refer to the descriptions corresponding to FIG. 3b. Details are not described again.

In this embodiment, the first AP may directly send the second message to the AC when receiving the first message, or the first AP may send the second message to the AC based on the first message when the first AP determines that the first message satisfies a reporting condition. Specifically, the reporting condition is that the first time stamp is later than a latest time stamp that has been stored by the first AP. With reference to the example shown in Table 3, in a process in which the AC performs PN synchronization in an (M-1)^{th} round, the AC sends a first time stamp bM-1 to the first AP, and the first AP stores the first time stamp bM-1, where the first time stamp bM-1 is the latest first time stamp that has been stored by the first AP. In a process in which the AC performs PN synchronization in the M^{th} round, the AC sends the first time stamp bM to the first AP. The first AP determines that the first time stamp bM is later than the first time stamp bM-1, thereby determining that the first message carrying the first time stamp bM satisfies the reporting condition. In this case, the first AP sends the second message to the AC based on the first message carrying the first time stamp bM.

After receiving the first message, the first AP obtains the first time stamp by parsing the first message. In the second message generated by a second AP, the second time stamp is equal to the first time stamp. For example, if the first AP obtains the time stamp bM by parsing the first message, the first AP sets the time stamp bM in the second message, so that a time stamp carried in the second message is also the time stamp bM.

Step 405: The AC obtains a first PN list corresponding to a network.

For an execution process of step 405 shown in this embodiment, refer to step 205 in FIG. 2. Details are not described again.

Step 406: The AC sends a fourth message to the second AP.

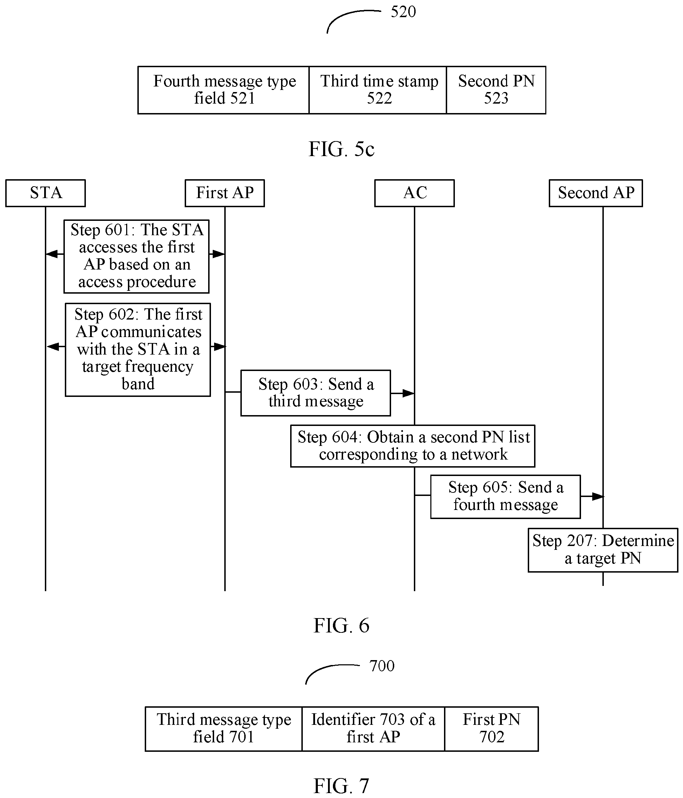

The AC sends the fourth message to each AP in the network that has been associated with the AC. For a specific format of the fourth message, refer to FIG. 5c. FIG. 5c is an example diagram a second message format of a fourth message according to an embodiment of this application. The fourth message 520 includes a fourth message type field 521, a third time stamp 522, and a second PN 523. For descriptions of the fourth message type field 521 and the second PN 523, refer to the descriptions in FIG. 3c. Details are not described again. If the fourth message 520 is used for the M^{th} round of PN synchronization, the third time stamp 522 is the first time stamp obtained by the AC in the M^{th} round. For specific descriptions, refer to the example shown in Table 3. Details are not described again.

Optionally, the AC may send the fourth message only to the second AP that satisfies a PN synchronization condition and that is included in the network. For descriptions of the PN synchronization condition, refer to step 206 in FIG. 2. Details are not described again.

Step 407: The second AP determines a target PN based on the fourth message.

The target PN is a PN used for a data frame to be sent by the second AP. Specifically, when the second AP determines the target PN, an MPDU subsequently sent by the second AP to the STA through broadcast or multicast carries the target PN, to ensure secure communication between the second AP and the STA.

### Manner 1

The second AP obtains, from the fourth message from the AC, the third time stamp and the second PN that are carried in the fourth message. Specifically, the second AP parses the fourth message based on the fourth message type field in the fourth message, to obtain the fields carried in the fourth message. The second message that has been sent by the second AP to the AC carries the second time stamp. For descriptions of the second time stamp, refer to step 404. Details are not described again.

When the second time stamp is equal to the third time stamp carried in the fourth message, the second AP determines that the target PN is the second PN. The second time stamp being equal to the third time stamp carried in the fourth message indicates that the second AP has sent a PN of the second AP to the AC (for a specific process, refer to step 404, and details are not described). Therefore, when the second AP determines that the target PN is the second PN, the target PN is a largest value in PNs corresponding to the APs in the network.

### Manner 2

First, the second AP obtains, from the fourth message from the AC, the second PN carried in the fourth message. Then, the second AP determines the target PN based on the second PN and a latest PN. For descriptions of a specific process, refer to step 207 in FIG. 2. Details are not described again.

Optionally, in this embodiment, when the AC obtains the first PN list, the AC sends, to the second AP only when the AC determines that the first PN list satisfies the synchronization condition, the fourth message carrying the second PN. The synchronization condition is that a target difference between a largest value and a smallest value in a plurality of PNs included in the first PN list is greater than or equal to a threshold. Still refer to the example shown in Table 2, if in the first PN of the AP 1, the first PN of the AP 2, the first PN of the AP 3, and the first PN of the AP 4 that are included in the first PN list, a largest value in the PNs may be the first PN of the AP 4, and a smallest value in the PNs may be the first PN of the AP 2, the target difference is equal to a difference between the first PN of the AP 4 and the first PN of the AP 2. When the target difference is less than the threshold, it indicates that when the STA performs roaming handover from one AP included in the network to another AP, because a difference between counts of AP-side anti-replay counters corresponding to the two APs is not large, when the AC does not send the second PN to the second AP, even if the STA performs roaming handover from the AP included in the network to the another AP, great communication overheads are not caused in a process in which the STA communicates with the AP to which the STA performs roaming handover. For example, in an example 4, the network includes only the AP 1 and AP 2. A count of an AP-side anti-replay counter of the AP 1 is 150, and a count of an AP-side anti-replay counter of the AP 2 is 145. Therefore, the target difference is 150-145=5. If the threshold is 10, it can be learned that the target difference shown in the example 4 is less than the threshold. In this case, when the STA performs roaming handover from the AP 1 to the AP 2, the STA discards only five MPDUs from the AP 2, so that subsequent normal communication between the STA and the AP 2 can be ensured. For specific descriptions, refer to the example 3 corresponding to FIG. 2. Details are not described again. It may be understood that, when the target difference is less than the threshold, the AC does not need to send the fourth message to the second AP to implement PN synchronization of the APs in the network, and secure communication does not cause an excessively large overhead loss. Therefore, the AC does not need to consume a communication resource to synchronize the PNs of the APs in the network.

According to the method shown in this embodiment, when the STA performs roaming handover, efficiency of successful communication between the STA and the AP to which the STA performs roaming handover can be effectively improved, and overheads of communication between the STA and the AP to which the STA performs roaming handover are reduced. When secure communication between the AP and the STA is implemented to avoid a replay attack or an injection attack, a quantity of lost data frames is effectively reduced, and a waste of a communication resource is reduced.

In the embodiments shown in FIG. 2 and FIG. 4, the AC triggers, based on the first message, synchronization of the PNs stored by the APs in network. In an embodiment shown in FIG. 6, an AP triggers synchronization of PNs stored by APs in a network. FIG. 6 is a third flowchart of steps of a PN synchronization method according to an embodiment of this application.

Step 601: A STA accesses a first AP based on an access procedure.

Step 602: The first AP communicates with the STA in a target frequency band.

For execution processes of steps 601 and 602 shown in this embodiment, refer to steps 201 and 202 shown in FIG. 2. Details are not described again.

Step 603: The first AP sends a third message to an AC.

The third message is used by the first AP to actively report a first PN to the AC, where the first PN is a current count of an AP-side anti-replay counter. For descriptions of the first PN, refer to the descriptions of step 203 corresponding to FIG. 2. Details are not described again.

For a format of the third message shown in this embodiment, refer to FIG. 7. FIG. 7 is an example diagram of a message format of a third message according to an embodiment of this application. The third message 700 includes a third message type field 701, a first PN 702, and an identifier 703 that identifies the first AP. The third message type field 701 indicates that the third message is for reporting the first PN. For descriptions of the third message type field 701, refer to the descriptions of the first message type field corresponding to FIG. 2. Details are not described again. For descriptions of the first PN 702 and the identifier 703 that identifies the first AP, refer to the descriptions of the second message shown in FIG. 3b. Details are not described again.

Step 604: The AC obtains a second PN list corresponding to a network.

In this embodiment, the AC receives a first PN from each AP included in the network, and creates the second PN list. If the AC determines that a plurality of APs that have been associated with the AC are in a third synchronization success state, the AC sends a second PN to a second AP based on the second PN list. Specifically, the AC presets a synchronization period. If the AC successfully creates the second PN list in the synchronization period, the AC determines that the plurality of APs that have been associated with the AC are in the third synchronization success state. Duration of the synchronization period is not limited in this embodiment. For example, the duration of the synchronization period may be 10 minutes.

For example, the network that has been associated with the AC includes an AP 1, an AP 2, an AP 3, and an AP 4. If the AC successfully receives, in the synchronization period, a first PN from the AP 1, a first PN from the AP 2, a first PN from the AP 3, and a first PN from the AP 4, the AC determines that the plurality of APs associated with the AC are in the third synchronization success state. For descriptions of a correspondence included in the second PN list, refer to the descriptions of the first PN list shown in Table 2. Details are not described again.

Step 605: The AC sends a fourth message to the second AP.

Step 606: The second AP determines a target PN based on the fourth message.

For descriptions of execution processes of steps 605 and 606 shown in this embodiment, refer to steps 206 and 207 corresponding to FIG. 2. Details are not described again.

According to the method shown in this embodiment, the first AP actively reports the first PN to the AC, and the AC synchronizes, based on the first PN actively reported by the first AP, the PNs of the APs included in the network. When the AC synchronizes the PNs of the APs included in the network, a quantity of pieces of signaling exchanged between the AC and the APs can be further reduced, and utilization efficiency of a communication resource is reduced.

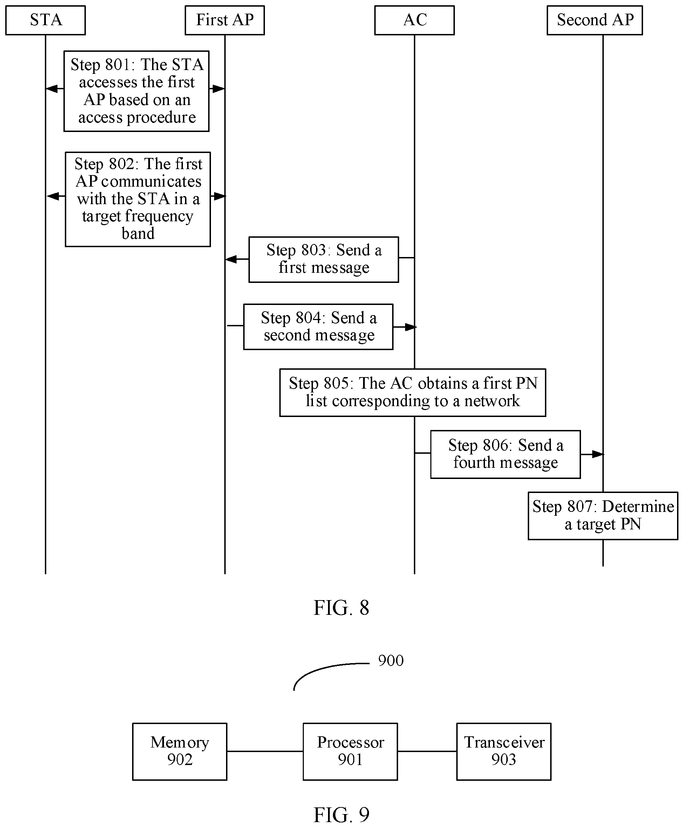

In the embodiment shown in FIG. 2, a larger quantity of multicast data frames or broadcast data frames sent by the first AP indicates a larger count of the AP-side anti-replay counter of the first AP. In an embodiment shown in FIG. 8, a larger quantity of multicast data frames or broadcast data frames sent by a first AP indicates a smaller count of an AP-side anti-replay counter of the first AP. FIG. 8 is a fourth flowchart of steps of a PN synchronization method according to an embodiment of this application.

Step 801: A STA accesses a first AP based on an access procedure.

Step 802: The first AP communicates with the STA in a target frequency band.

For descriptions of execution processes of steps 801 and 802 shown in this embodiment, refer to step 201 and step 202 corresponding to FIG. 2. Details are not described again.

The first AP in this embodiment also sets an AP-side anti-replay counter. An initial value of the AP-side anti-replay counter is a maximum quantity of MPDUs sent by the first AP in a period. For example, the initial value of the AP-side anti-replay counter may be 100. Each time the first AP has a to-be-sent multicast or broadcast MPDU, the first AP decreases a value of the AP-side anti-replay counter by 1. The first AP sets a value of a PN field in the MPDU to a current count (that is, 99) of the AP-side anti-replay counter. The STA also sets a STA-side anti-replay counter. An initial value of the STA-side anti-replay counter is the same as the count of the AP-side anti-replay counter, and is also 100. Each time the STA successfully receives one MPDU, the STA decreases a value of the STA-side anti-replay counter by 1. In this embodiment, an example in which the initial values of the AP-side anti-replay counter and the STA-side anti-replay counter are both 100 is used, and constitutes no limitation. In another example, the initial values of the AP-side anti-replay counter and the STA-side anti-replay counter each may be any value.

Example 5: When the first AP needs, for the first time, to send an MPDU to the STA, the first AP sets the value of the AP-side anti-replay counter to be equal to the initial value minus 1, that is, equal to 100 minus 1, that is, equal to 99; and the first AP further sets a value of a PN field in the MPDU to the current value (that is, 99) of the AP-side anti-replay counter. When the STA receives the MPDU, the STA determines that the value of the PN field in the MPDU is 99. In addition, the value of the STA-side anti-replay counter is the initial value (that is, 100). In this case, the STA determines that the value (that is, 99) of the PN field in the received MPDU is less than the value (that is, 100) of the STA-side anti-replay counter, and the STA determines that the MPDU is an MPDU in a secure state. In this case, the STA sets the value of the STA-side anti-replay counter to the value (that is, 99) of the PN field in the MPDU. By analogy, details are not described again.

The MPDU in the secure state in this embodiment means that the MPDU is not an MPDU for a replay attack or an injection attack. The replay attack is used as an example. Still refer to the foregoing example 5. If an attack device obtains the MPDU received by the STA for the first time, and the value of the PN field in the MPDU is 99, the attack device resends the MPDU to the STA. When the STA receives the MPDU, the STA determines that the value of the PN field in the MPDU is 99 (because a PN from the attack device does not undergo processing performed by the first AP on the PN field). In addition, the value of the STA-side anti-replay counter is 99. In this case, the STA determines that the value (that is, 99) of the PN field in the received MPDU is equal to the value (that is, 99) of the STA-side anti-replay counter. When the STA determines that the value of the PN field in the received MPDU is greater than or equal to the value of the STA-side anti-replay counter, the STA directly discards the MPDU. In this case, the STA shown in this example discards the MPDU from the attack device. It may be understood that, the first AP sends, to the STA, the MPDU including the PN, so that secure communication between the first AP and the STA is ensured, to prevent the STA from the replay attack or the injection attack of the attack device.

Step 803: The AC sends a first message to the first AP.

The first message requests the first AP to send a first PN. For specific descriptions of the first message, refer to the descriptions of step 203 corresponding to FIG. 2. Details are not described again. In this embodiment, an example in which the first message includes a first round value that indicates a round of PN synchronization is used. For descriptions of the first round value, refer to the descriptions corresponding to FIG. 2. Details are not described again.

Step 804: The first AP sends a second message to the AC based on the first message.

Step 805: The AC obtains a first PN list corresponding to a network.

For descriptions of an execution process of step 805 shown in this embodiment, refer to step 205 corresponding to FIG. 2. Details are not described again.

Step 806: The AC sends a fourth message to a second AP.

The AC sends the fourth message to each AP in the network that has been associated with the AC. For descriptions of a format of the fourth message, refer to step 206 corresponding to FIG. 2. Details are not described again.

A second PN carried in the fourth message is described as follows: When the AC successfully creates a first PN list corresponding to a round value that is M, the AC determines that the second PN is a smallest value in a plurality of first PNs included in the first PN list. Still refer to the example shown in Table 2. The AC determines that a smallest value in the first PN of the AP 1, the first PN of the AP 2, the first PN of the AP 3, and the first PN of the AP 4 that are included in the first PN list is the second PN. For example, if the first PN of the AP 1 in the first PN list is the smallest value in the first PNs included in the first PN list, the AC determines that the first PN of the AP 1 is the second PN.

Optionally, the AC may send the fourth message only to the second AP that satisfies a PN synchronization condition and that is included in the network. It may be understood that the second AP in this example is an AP that satisfies the PN synchronization condition in the network that has been associated with the AC. The second AP that satisfies the PN synchronization condition means that a third PN of the second AP is greater than the second PN in the first PN list corresponding to the round value that is M. The third PN is a PN carried in the second message from the second AP. Still refer to the example shown in Table 2. The AC determines that the second PN is the first PN of the AP 1. In this case, the AC determines that the PN stored by the AP 1 has been the smallest value in the plurality of first PNs in the first PN list corresponding to the round value that is M. In this case, in a process of the M^{th} round of PN synchronization, the first PN stored by the AP 1 does not need to be synchronized. Therefore, the AC determines that all of the AP 2, the AP 3, and the AP 4 are second APs that need PN synchronization. The AC sends the fourth message to the AP 2 based on the MAC address that is of the AP 2 and that is included in the first PN list. By analogy, the AC sends the fourth message to the AP 4 based on the MAC address that is of the AP 4 and that is included in the first PN list.

Step 807: The second AP determines a target PN based on the fourth message.

The target PN is a PN used for a data frame to be sent by the second AP. Specifically, when the second AP determines the target PN, an MPDU subsequently sent by the second AP to the STA through broadcast or multicast carries the target PN, to ensure secure communication between the second AP and the STA. The following describes, by using examples, several optional manners in which the second AP determines the target PN based on the fourth message.

### Manner 1

The second AP obtains, from the fourth message from the AC, a third round value and the second PN that are carried in the fourth message. Specifically, the second AP parses the fourth message based on a fourth message type field in the fourth message, to obtain fields carried in the fourth message. The second message sent by the second AP to the AC carries a second round value. For descriptions of the second round value, refer to step 204. Details are not described again.

When the second round value is equal to the third round value, the second AP determines that the target PN is the second PN. The second round value being equal to the third round value indicates that the second AP has sent a PN of the second AP to the AC (for a specific process, refer to step 204, and details are not described). Therefore, when the second AP determines that the target PN is the second PN, the target PN is a smallest value in PNs corresponding to the APs in the network.

### Manner 2

First, the second AP obtains, from the fourth message from the AC, the second PN carried in the fourth message. Then, the second AP obtains a latest PN stored by the second AP, where the latest PN is a latest PN stored by the second AP before the second AP receives the fourth message. That is, the latest PN is a current count of an AP-side anti-replay counter of the second AP. For specific descriptions of the AP-side anti-replay counter, refer to the example 5 in step 202. Details are not described again. For example, if the second AP has sent MPDUs to the STA M times, the latest PN is a PN carried in an MPDU sent by the second AP to the STA for an M^{th} time.

If the second AP determines that the second PN from the AC is greater than or equal to the latest PN, the second AP determines that the target PN is the latest PN. Specifically, in the process of the M^{th} round of PN synchronization, the second AP sends the round value that is M and the first PN to the AC. This indicates that the second AP has completed the process of the M^{th} round of PN synchronization (that is, the second AP has sent, to the AC, the second message carrying the round value that is M). In this case, the count of the AP-side anti-replay counter is the first PN. However, when the second AP has not received the second PN from the AC, the second AP continues to send a new MPDU to the STA through broadcast or multicast. As a result, the count of the AP-side anti-replay counter of the second AP continues to progressively decrease. For descriptions of the progressive decrease, refer to the descriptions of the foregoing example 5. Details are not described again. The second AP receives the second PN from the AC only after the count of the AP-side anti-replay counter of the second AP progressively decreases to the latest PN. As a result, the second PN is greater than the latest PN. If the second AP sends an MPDU to the STA through broadcast or multicast by using the second PN, the MPDU carrying the second PN cannot be successfully received by the STA (because the STA-side anti-replay counter is less than the second PN). Therefore, when the second AP shown in this example determines that the second PN is greater than the latest PN, the second AP does not update the count of the AP-side anti-replay counter, but continues to send the MPDU to the STA by using the latest PN. Therefore, the second AP shown in this example determines that the target PN is the latest PN.

If the second AP determines that the second PN from the AC is less than the latest PN, the second AP determines that the target PN is the second PN. Specifically, in the process of the M^{th} round of PN synchronization, the second AP sends the round value that is M and the first PN to the AC. This indicates that the second AP has completed the process of the M^{th} round of PN synchronization (that is, the second AP has sent, to the AC, the second message carrying the round value that is M). In this case, the count of the AP-side anti-replay counter is the first PN. Then, the second AP receives the second PN from the AC. When the second PN is less than the latest PN, it indicates that the count of the AP-side anti-replay counter of the second AP is greater than a second PN stored by another AP included in the network. Therefore, to ensure that the MPDU sent by the second AP to the STA through broadcast or multicast can be successfully received by the STA, the second AP shown in this example determines that the target PN is the second PN.

It should be noted that, in this embodiment, that the AC determines a round of PN synchronization by using a round value is used as an example. The AC shown in this embodiment may further determine the round of PN synchronization by using a time stamp, to implement PN synchronization of the APs included in the network. For a specific process, refer to the descriptions of the embodiment corresponding to FIG. 4. Details are not described again. When the larger quantity of multicast data frames or broadcast data frames sent by the first AP indicates a smaller value of the first PN, the first AP may also trigger the AC to implement PN synchronization of the APs included in the network. For a specific execution process, refer to the process of implementing PN synchronization of the APs included in the network shown in FIG. 6. Details are not described again.

When the second AP obtains the target PN, in a process of subsequently sending the MPDU to the STA, the second AP sets the target PN in the MPDU, to implement the secure communication between the second AP and the STA. After performing roaming handover from the AP 1 to the AP 2, the STA can directly communicate with AP 2 successfully. When the STA performs roaming handover, efficiency of successful communication between the STA and an AP to which the STA performs roaming handover can be effectively improved, and overheads of communication between the STA and the AP to which the STA performs roaming handover are reduced. When secure communication between the AP and the STA is implemented to avoid the replay attack or the injection attack, a quantity of lost data frames is effectively reduced, and a waste of a communication resource is reduced.

Embodiments of this application provide a communication device. For a structure of the communication device, refer to FIG. 9. FIG. 9 is an example diagram of a first structure of a communication device according to an embodiment of this application.

The communication device 900 shown in this embodiment includes a processor 901, a memory 902, and a transceiver 903. The processor 901 is connected to the memory 902 and the transceiver 903. The processor 901 may include at least one of an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, or a neural-network processing unit (neural-network processing unit, NPU). The transceiver 903 receives an electromagnetic wave, performs frequency modulation and filtering processing on an electromagnetic wave signal, and sends a processed signal to the processor 901. The transceiver 903 may further receive a to-be-sent signal from the processor 901, perform frequency modulation and amplification on the signal, and convert the signal into an electromagnetic wave for radiation. The memory 902 stores program instructions.

If the communication device 900 shown in this embodiment is an AP, when the program instructions stored in the memory 902 are executed by the processor 901, the AP is enabled to perform the process performed by the AP in any method embodiment in FIG. 2, FIG. 4, FIG. 6, or FIG. 8. If the communication device 900 shown in this embodiment is an AC, when the program instructions stored in the memory 902 are executed by the processor 901, the AC is enabled to perform the process performed by the AC in any method embodiment in FIG. 2, FIG. 4, FIG. 6, or FIG. 8 above. If the communication device 900 shown in this embodiment is a STA, when the program instructions stored in the memory 902 are executed by the processor 901, the STA is enabled to perform the process performed by the STA in any method embodiment in FIG. 2, FIG. 4, FIG. 6, or FIG. 8.

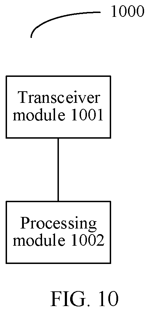

Embodiments further provide a communication device shown in FIG. 10. FIG. 10 shows a structure of the communication device from a perspective of function modules. FIG. 10 is an example diagram of a second structure of a communication device according to an embodiment of this application.

The communication device 1000 shown in this embodiment includes a transceiver module 1001 and a processing module 1002 connected to the transceiver module 1001. If the communication device 1000 shown in this embodiment is an AC, the transceiver module 1001 is configured to perform a step related to receiving and sending and performed by the AC in any method embodiment in FIG. 2, FIG. 4, FIG. 6, or FIG. 8. The processing module 1002 is configured to perform a step related to processing and performed by the AC in any method embodiment in FIG. 2, FIG. 4, FIG. 6, or FIG. 8. If the communication device 1000 shown in this embodiment is an AP, the transceiver module 1001 is configured to perform a step related to receiving and sending and performed by the AP in any method embodiment in FIG. 2, FIG. 4, FIG. 6, or FIG. 8. The processing module 1002 is configured to perform a step related to processing and performed by the AP in any method embodiment in FIG. 2, FIG. 4, FIG. 6, or FIG. 8. If the communication device 1000 shown in this embodiment is a STA, the transceiver module 1001 is configured to perform a step related to receiving and sending and performed by the STA in any method embodiment in FIG. 2, FIG. 4, FIG. 6, or FIG. 8. The processing module 1002 is configured to perform a step related to processing and performed by the STA in any method embodiment in FIG. 2, FIG. 4, FIG. 6, or FIG. 8.

An embodiment of this application further provides a computer-readable storage medium. The computer storage medium stores a computer program. The computer program includes program instructions. When the program instructions are executed by a processor, the processor is enabled to perform the method shown in any method embodiment in FIG. 2, FIG. 4, FIG. 6, or FIG. 8.

In conclusion, the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the spirit and the scope of the technical solutions in embodiments of the present invention.

## Claims

1. A packet number synchronization method, wherein the method comprises:
receiving, by an access controller AC, a first packet number PN from a first access point AP, wherein the first AP is any one of a plurality of APs that have been associated with the AC, and the first PN indicates a quantity of multicast data frames or broadcast data frames that have been sent by the first AP; and
sending, by the AC, a second PN to a second AP, wherein the second PN is one of a plurality of PNs corresponding to the plurality of APs, each of the plurality of PNs is from one of the plurality of APs, and the second AP is one of the plurality of APs.

2. The method according to claim 1, wherein when a larger quantity of multicast data frames or broadcast data frames sent by the first AP indicates a larger value of the first PN, the second PN is a largest value in the plurality of PNs.

3. The method according to claim 1, wherein when a larger quantity of multicast data frames or broadcast data frames sent by the first AP indicates a smaller value of the first PN, the second PN is a smallest value in the plurality of PNs.

4. The method according to any one of claims 1 to 3, wherein before the receiving, by an access controller AC, a first packet number PN from a first access point AP, the method comprises:
sending, by the AC, a first message to the first AP, wherein the first message carries a first message type field, and the first message type field is used to request the first PN; and
receiving, by the AC, a second message from the first AP, wherein the second message carries a second message type field and the first PN, and the second message type field indicates that the second message carries the first PN.

5. The method according to claim 4, wherein the first message further carries a first round value, and the first round value indicates a round of sending the first message by the AC.

6. The method according to claim 5, wherein the second message carries a second round value, and before the sending, by the AC, a second PN to a second AP, the method further comprises:
determining, by the AC, that the first round value is the same as the second round value.

7. The method according to claim 6, wherein before the sending, by the AC, a second PN to a second AP, the method further comprises:
determining, by the AC, that the plurality of APs are in a first synchronization success state, wherein the first synchronization success state means that the plurality of PNs comprise a PN from each of the plurality of APs, and all second round values from different APs in the plurality of APs are the same.

8. The method according to claim 4, wherein the first message further carries a first time stamp, and the first time stamp indicates time at which the AC sends the first message.

9. The method according to claim 8, wherein the second message carries a second time stamp, and before the sending, by the AC, a second PN to a second AP, the method further comprises:
determining, by the AC, that the first time stamp is the same as the second time stamp.

10. The method according to claim 9, wherein before the sending, by the AC, a second PN to a second AP, the method further comprises:
determining, by the AC, that the plurality of APs are in a second synchronization success state, wherein the second synchronization success state means that the plurality of PNs comprise a PN from each of the plurality of APs, and all second time stamps from different APs in the plurality of APs are the same.

11. The method according to any one of claims 1 to 3, wherein the receiving, by an access controller AC, a first packet number PN from a first access point AP comprises:
receiving, by the AC, a third message from the first AP, wherein the third message carries a third message type field, the first PN, and an identifier that identifies the first AP, and the third message type field indicates that the third message carries the first PN.

12. The method according to claim 11, wherein before the sending, by the AC, a second PN to a second AP, the method further comprises:
determining, by the AC, that the plurality of APs are in a third synchronization success state, wherein the third synchronization success state means that the AC receives the plurality of PNs in one synchronization period, and the plurality of PNs comprise a PN from each AP of the plurality of APs.

13. The method according to any one of claims 1 to 12, wherein the sending, by the AC, a second PN to a second AP comprises:
sending, by the AC, a fourth message to the second AP, wherein the fourth message carries a fourth message type field and the second PN, and the fourth message type field indicates that the fourth message carries the second PN.

14. The method according to any one of claims 1 to 13, wherein the sending, by the AC, a second PN to a second AP comprises:
determining, by the AC, that a target difference is less than or equal to a threshold, and sending, by the AC, the second PN to the second AP, wherein the target difference is a difference between the largest value and the smallest value in the plurality of PNs.

15. The method according to any one of claims 1 to 14, wherein basic service set identifiers BSSIDs of any two different APs in the plurality of APs are the same.

16. A packet number synchronization method, wherein the method comprises:
sending, by an access point AP, a first packet number PN to an access controller AC, wherein the AP is any one of a plurality of APs that have been associated with the AC, and the first PN indicates a quantity of multicast data frames or broadcast data frames that have been sent by the AP;
receiving, by the AP, a second PN from the AC; and
determining, by the AP, a target PN based on the second PN, wherein the target PN is a PN used for a multicast data frame or a broadcast data frame that is to be sent by the AP.

17. The method according to claim 16, wherein before the sending, by an access point AP, a first packet number PN to an access controller AC, the method further comprises:
receiving, by the AP, a first message from the AC, wherein the first message carries a first message type field, and the first message type field is used to request the first PN; and
the sending, by an access point AP, a first packet number PN to an access controller AC comprises:
sending, by the AP, a second message to the AC based on the first message, wherein the second message carries a second message type field and the first PN, and the second message type field indicates that the second message carries the first PN.

18. The method according to claim 17, wherein the first message further carries a first round value, the first round value indicates a round of sending the first message by the AC, and the sending, by the AP, a second message to the AC based on the first message comprises:
sending, by the AP to the AC, the second message carrying a second round value, wherein the first round value is the same as the second round value.

19. The method according to claim 17, wherein the first message further carries a first time stamp, the first time stamp indicates time at which the AC sends the first message, and the sending, by the AP, a second message to the AC based on the first message comprises:
sending, by the AP to the AC, the second message carrying a second time stamp, wherein the second time stamp is the same as the first time stamp.

20. The method according to claim 16, wherein the sending, by an access point AP, a first packet number PN to an access controller AC comprises:
sending, by the AP, a third message to the AC, wherein the third message carries a third message type field, the first PN, and an identifier that identifies the AP, and the third message type field indicates that the third message carries the first PN.

21. The method according to any one of claims 16 to 20, wherein the determining, by the AP, a target PN based on the second PN comprises:
when a larger quantity of multicast data frames or broadcast data frames sent by the AP indicates a larger value of the first PN, if the AP determines that the second PN is less than or equal to a latest PN of the AP, determining, by the AP, that the target PN is the latest PN, wherein the latest PN is a PN currently stored by the AP; or
if the AP determines that the second PN is greater than a latest PN, determining, by the AP, that the target PN is the second PN.

22. The method according to any one of claims 16 to 20, wherein the determining, by the AP, a target PN based on the second PN comprises:
when a larger quantity of multicast data frames or broadcast data frames sent by the AP indicates a smaller value of the first PN, if the AP determines that the second PN is greater than a latest PN, determining, by the AP, that the target PN is the latest PN, wherein the latest PN is a PN currently stored by the AP; or
if the AP determines that the second PN is less than the latest PN, determining, by the AP, that the target PN is the second PN.

23. An access controller, wherein the access controller comprises a processor, a memory, and a transceiver, and the processor is connected to the memory and the transceiver;
the transceiver is configured to receive a first packet number PN from a first access point AP, wherein the first AP is any one of a plurality of APs that have been associated with the AC, and the first PN indicates a quantity of multicast data frames or broadcast data frames that have been sent by the first AP;
the processor is configured to obtain a second PN, wherein the second PN is one of a plurality of PNs corresponding to the plurality of APs, and each of the plurality of PNs is from one of the plurality of APs; and
the transceiver is further configured to send the second PN to a second AP, wherein the second AP is one of the plurality of APs.

24. An access point, wherein the access point comprises a processor, a memory, and a transceiver, and the processor is connected to the memory and the transceiver;
the transceiver is configured to send a first packet number PN to an access controller AC, wherein the AP is any one of a plurality of APs that have been associated with the AC, and the first PN indicates a quantity of multicast data frames or broadcast data frames that have been sent by the AP;
the transceiver is further configured to receive a second PN from the AC; and
the processor is configured to determine a target PN based on the second PN, wherein the target PN is a PN used for a multicast data frame or a broadcast data frame that is to be sent by the AP.

25. A wireless network, wherein the wireless network comprises an access controller AC, a plurality of access points APs associated with the AC, and at least one station STA associated with each AP;
a first AP is configured to send a first packet number PN to the AC, wherein the first AP is any one of the plurality of APs, and the first PN indicates a quantity of multicast data frames or broadcast data frames that have been sent by the first AP to the STA;
the AC is configured to receive the first PN from the first AP, and is configured to send a second PN to a second AP, wherein the second PN is one of a plurality of PNs corresponding to the plurality of APs, each of the plurality of PNs is from one of the plurality of APs, and the second AP is one of the plurality of APs;
the second AP is configured to receive the second PN from the AC; and
the second AP is further configured to determine a target PN based on the second PN, wherein the target PN is a PN used for a multicast data frame or a broadcast data frame that is to be sent by the second AP.
